# EUROPEAN PATENT APPLICATION

(11) **EP 3 486 118 A1**
(43) Date of publication of application: **22.05.2019**
(21) Application number: 18206214.1
(22) Date of filing: 14.11.2018
(51) Int. Cl.: B60P 3/36, B62D 33/06, B60R 7/04

(54) **AN IN-CABIN OVERHEAD CONSOLE**

(30) Priority: 15.11.2017 TR 201717991
(71) Applicant: Ford Otomotiv Sanayi Anonim Sirketi, 34885 Sancaktepe/Istanbul (TR)
(72) Inventor: AYATA, Adnan, 34885 ISTANBUL (TR); TURKER, Emre, 34885 ISTANBUL (TR); NOGAY, Ferit, KOCAELI (TR); RAHTUVAN, Guner Berker, ISTANBUL (TR)
(74) Representative: Dericioglu, E. Korhan

(57) **Abstract**

The present invention relates to an in-cabin overhead console (1) which enables transportation and/or storage of different sized objects of the driver and passengers in the vehicle cabins (A) of heavy commercial vehicles without causing any contraction in the living space.

## Description

### Field of the Invention

The present invention relates to an in-cabin overhead console which enables transportation and/or storage of different sized objects of the driver and passengers in the vehicle cabins of heavy commercial vehicles without causing any contraction in the living space.

### Background of the Invention

Load carrying vehicles are divided into three categories, namely light (LCV), medium (MCV) and heavy commercial vehicles (HCV) according to their load carrying capacities. Although in the light commercial vehicles the cabin where the driver is located is in the same area where the load is carried, the cabin and load carrying areas separated from each other in the vehicles carrying medium and heavy loads. In such vehicles, a separate cabin is designed for the driver and passengers, and the load and the driver are completely separated from each other. These cabins are equipped with many different comfort and safety features for the comfort and safety of the driver.

Today, in road transport, in heavy commercial vehicles, which are frequently used to transport heavy tonnage freight from one place to another, larger storage areas are required to be provided in the vehicle cabin due to driver and/or passenger needs. The vehicle cabin space cannot be differentiated due to mounting constraints and unchangeable field of view, thus the said space is limited. The limited vehicle cabin space leads to less storage area for the heavy commercial vehicle drivers and/or passengers for use in case of need. In the current art, it is aimed to increase the storage area by integrating a bag or compartment into the vehicle cabin. However, in this case, the increase in the storage area causes the in-cabin width to decrease. Decrease in the in-cabin width causes contraction in the living space of the driver and passenger inside the cabin.

The United States patent document no. US6875922B1, an application in the state of the art, discloses an outlet box with an adjustable depth position. Depth of the box can be adjusted by tightening or loosening a bolt provided in this box. Upon movement of the bolt, a threaded shaft provided on the rear surface of the inner platform is moved forward or backward by which the inner space can be changed. When this prior art document is compared with the invention of the present application, it is seen that the prior art document is used in buildings, equivalent structures or vehicles or in the field of installation of electrical cabling or lines in buildings. The invention of the prior art document does not have a cover. The prior art document differs from the invention of the present invention, since in the prior art document, the depth adjustment of the chamber is enabled not by using different sizes of chambers but by the fact that the fixed chamber is movable.

The United States patent document no. US5073978 (A), an application in the state of the art, discloses a frame which is adjustable in depth to fit removable vehicle radio sets therein. The radio set can be fixed by being fitted onto the notch selected on the space provided on the side surfaces of the frame. By means of the invention of this prior art document, a desired radio set can be mounted onto the console. When this prior art document is compared with the invention of the present application, the invention of the prior art document and the invention of the present application are used in the same technical field. Both inventions are based on a chamber whose depth can be increased or decreased when desired. The chamber in the prior art document is intended for vehicle radio set while the invention of the present application is intended to provide an overhead storage area. The prior art document does not provide the technical properties of the present invention.

The United States patent document no. US2010090490 (AI), an application in the state of the art, discloses a reconfigurable vehicle console system. A reconfigurable vehicle console system having adjustable side panels of different lengths. The invention also includes interchangeable face plates and quick disconnect clamps associated with each panel. When this prior art document is compared with the invention of the present application, it is seen that the prior art document discloses an invention wherein the depth can be manipulated thanks to the fact that the side surfaces are interchangeable and the desired storage space can be obtained. The notches provided on the side panels are used when fixing the panels at selected lengths. There is no information provided about any change provided in the cover opening part of the invention prior art document.

The United Kingdom patent document no. GB2416117 (A), an application in the state of the art, discloses an overhead locker for use in vehicles with large inner space such as caravans. The locker comprises a base member having an extruded rail and three partition members. The partition members interlock with the extruded base member. The locker is easy to assemble and disassemble and does not require a professional cabinet maker. When this prior art document is compared with the invention of the present application, it is seen that the prior art document discloses an overhead locker which allows use in different combinations and can be customized for different vehicles. The inner space of the invention disclosed in the said prior art document is fixed and cannot be changed. The prior art document does not provide the feature of ability to enlarge the inner space of the compartment which is provided in the present invention. The invention of the prior art document can use a locker cover when used in different combinations. The prior art document does not disclose use of a sliding mechanism for separating nesting storage areas. The prior art document includes notches and apertures for positioning the compartments in the locker.

The present invention relates to an overhead console located in the cabin in heavy commercial vehicles, and forms a plurality of nesting storage areas, thereby providing an increase in available storage space, if required. This way, if required, the nested storage areas are separated from each other by means of a sliding mechanism, thus creating more storage space. Thanks to the fact that the storage area is formed this way, the total storage area is increased, no contraction occurs in the living space of the cabin, the storage area can be concealed when not needed and each nesting layer can store different sized materials.

### Objectives of the Invention

The objective of the present invention is to provide an in-cabin overhead console arranged inside the cabin in heavy commercial vehicles.

Another objective of the present invention is to provide an in-cabin overhead console which increases the total storage area.

A further objective of the present invention is to provide an in-cabin overhead console which does not cause a contraction in the in-cabin living space.

Another objective of the present invention is to provide an in-cabin overhead console wherein the cover of the compartment can be adapted to different arrangements.

A further objective of the present invention is to provide an in-cabin overhead console wherein a notch platform is used in order to fit the sliding mechanism to the desired position in the overhead compartment.

### Summary of the Invention

The in-cabin overhead console; which is developed to fulfill the objective of the present invention, and which is defined in the first claim and the claims dependent thereon; generally includes a chamber and an expander. This chamber and the expander are connected to a holding frame and the said holding frame is mounted to the cabin. The expander provided in the in-cabin overhead console is located in the chamber and can move within the said chamber and thus can increase the volume of the space in the chamber.

### Detailed Description of the Invention

An in-cabin overhead console developed to fulfill the objective of the present invention is illustrated in the accompanying figures, in which:

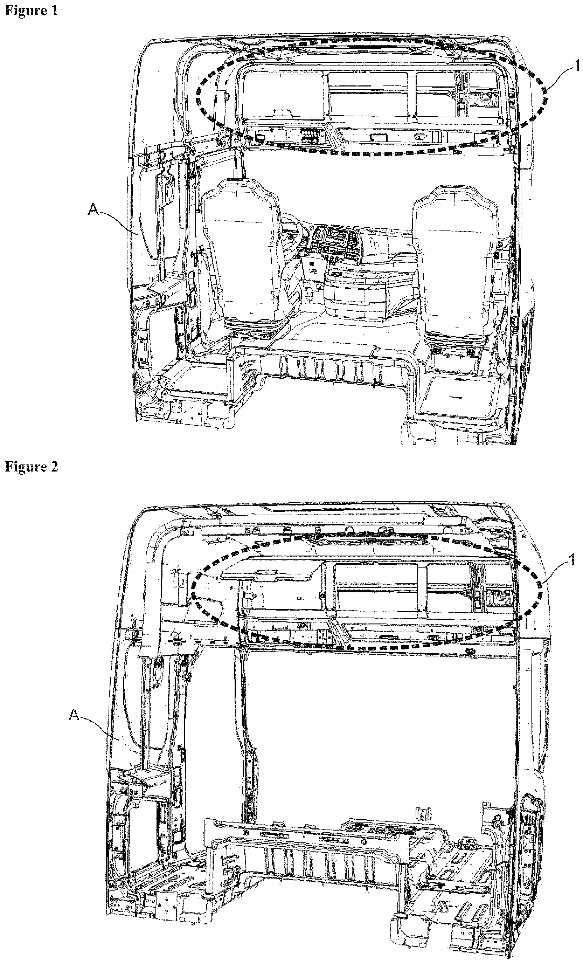

**Figure 1** is a perspective view of the in-cabin overhead console with the cabin.
**Figure 2** is a perspective view of the in-cabin overhead console with the cabin from another angle.

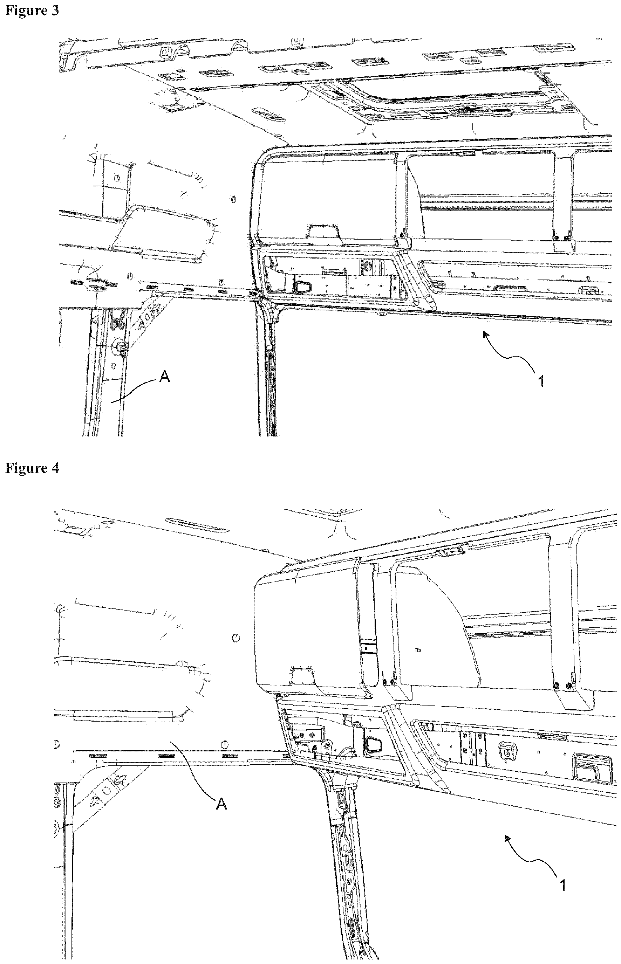

**Figure 3** is a perspective view from an angle of the in-cabin overhead console with the cabin from within the cabin wherein the cover is in closed position.
**Figure 4** is a perspective view from another angle of the in-cabin overhead console with the cabin from within the cabin wherein the cover is in closed position.

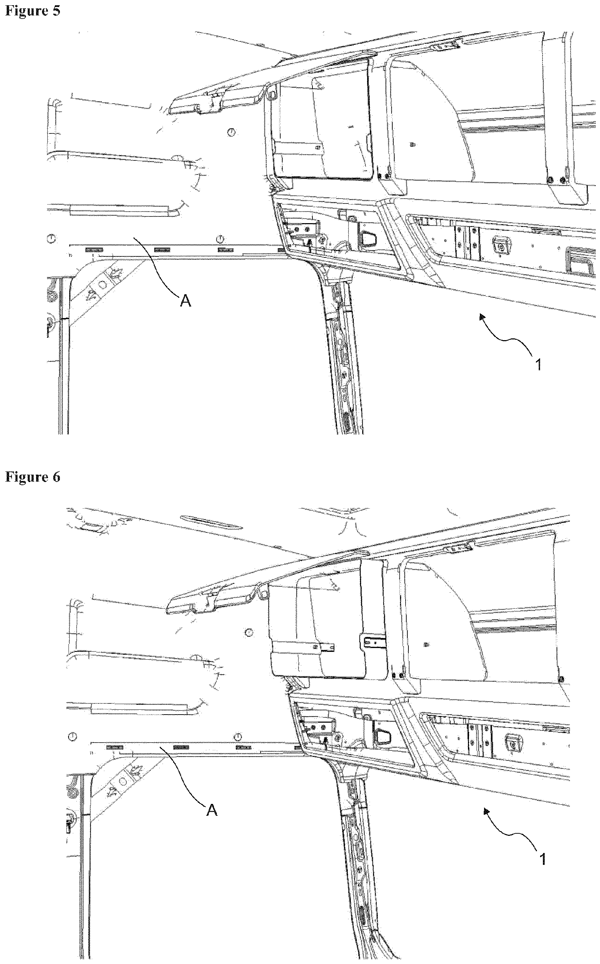

**Figure 5** is a perspective view from an angle of the in-cabin overhead console with the cabin from within the cabin wherein the cover is in open position.
**Figure 6** is a perspective view from another angle of the in-cabin overhead console with the cabin from within the cabin wherein the cover is in open position.

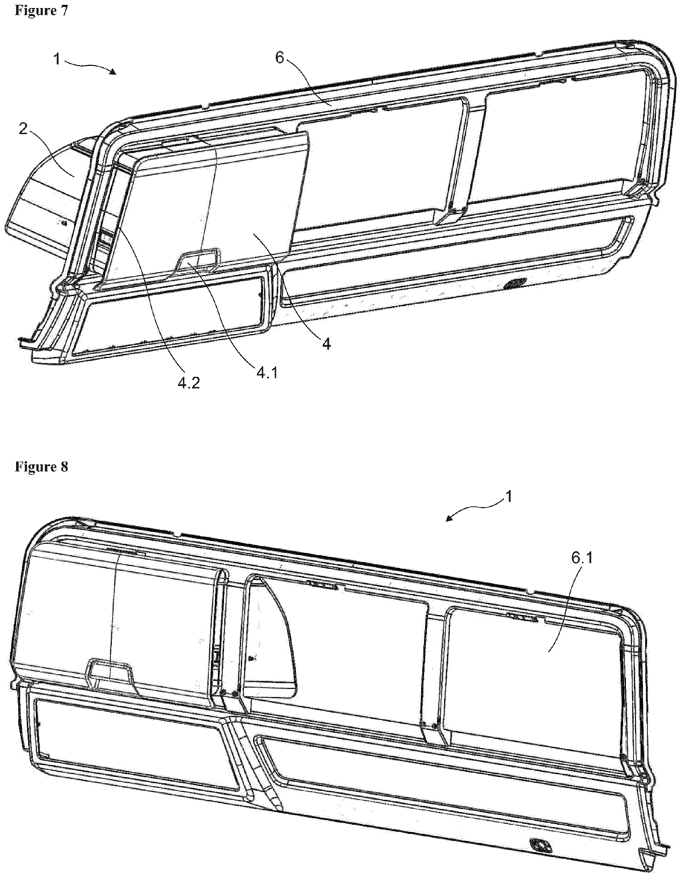

**Figure 7** is a perspective view of the in-cabin overhead console.
**Figure 8** is a perspective view of the in-cabin overhead console from another angle.

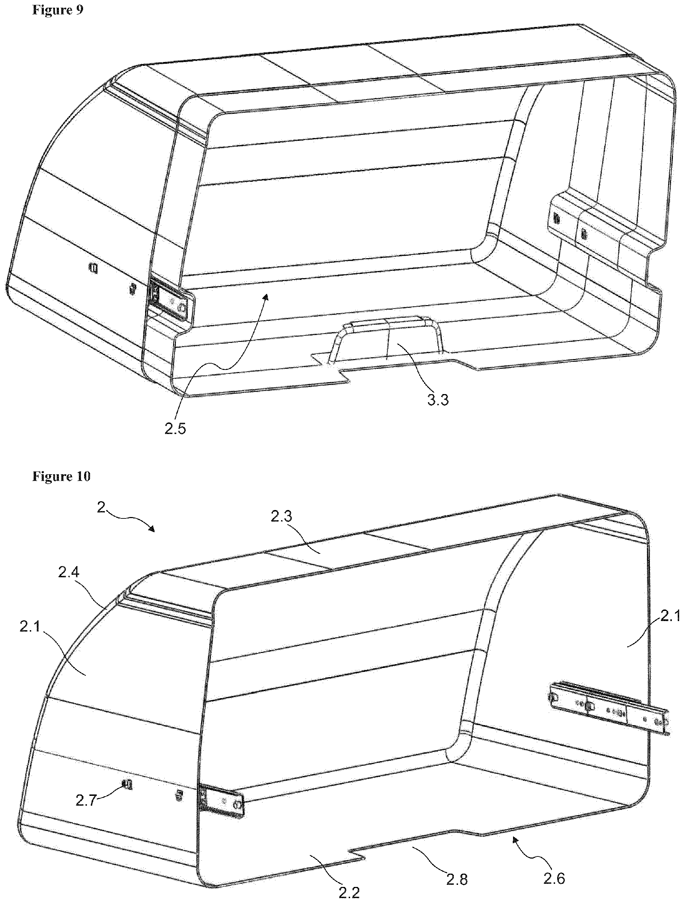

**Figure 9** is a perspective view of the chamber and the expander.
**Figure 10** is a perspective view of the chamber.

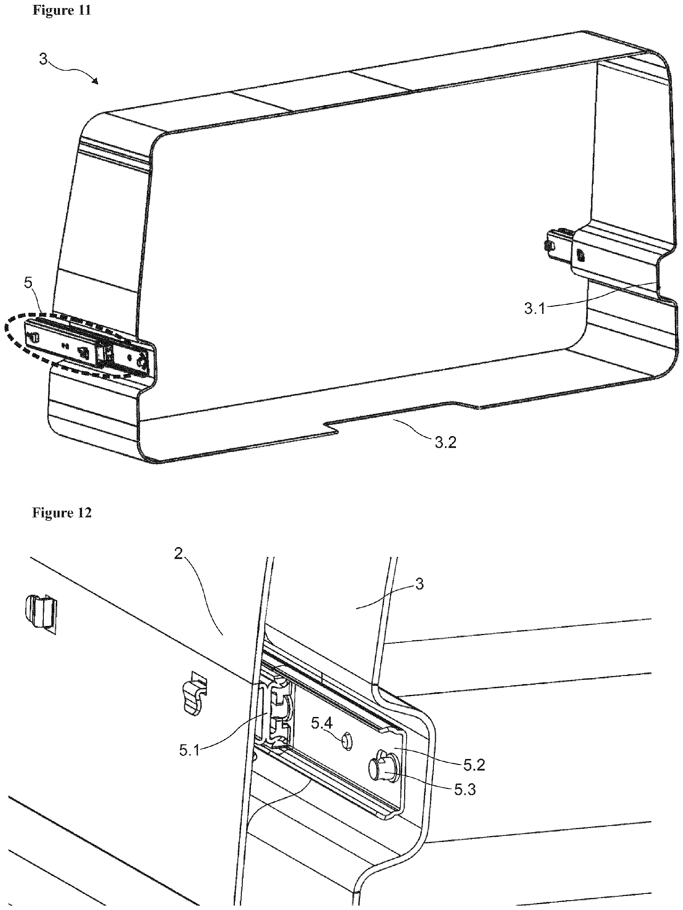

**Figure 11** is a perspective view of the expander.
**Figure 12** is a magnified perspective view of the chamber and the expander together with the movement member.

The components shown in the figures are given reference numbers as follows:
**1.** In-cabin overhead console
**2.** Chamber
   **2.1.** Side wall
   **2.2.** Base
   **2.3.** Top part
   **2.4.** Rear part
   **2.5.** Interior space
   **2.6.** Opening
   **2.7.** Mounting hole
   **2.8.** Step slot
**3.** Expander
   **3.1.** Movement groove
   **3.2.** Fitting slot
   **3.3.** Pull handle
**4.** Cover
   **4.1.** Opening handle
   **4.2.** Movement edge
**5.** Movement member
   **5.1.** First member
   **5.2.** Second member
   **5.3.** Rotation member
   **5.4.** Protrusion
**6.** Holding frame
   **6.1.** Cavity
**A.** Cabin

The in-cabin overhead console (1), which enables transportation and/or storage of different sized objects of the driver and passengers in the vehicle cabins (A) of heavy commercial vehicles without causing any contraction in the living space, essentially comprises
- at least one chamber (2), which enables storage of an object preferred to be placed in a closed space in the vehicle cabin (A), and wherein only one of its six surfaces is open and the inner part thereof can accessed through the said open surface,
- at least one expander (3); which is positioned in or out of the chamber (2) to increase the storage volume of the chamber (2); and wherein two opposing surfaces of its six surfaces are open while the others are closed and a cover (4) can be mounted to one of the said two open surfaces and its surface with a cover (4) mounted is parallel with the open surface of the chamber (2); and which is also movable, preferably gradually, in both directions at the open surface of the chamber (2), and which, if the said movement is towards outside of the chamber (2), increases the storage volume of the chamber (2).

In one embodiment of the invention, the in-cabin overhead console (1) preferably includes a holding frame (6). The said holding frame (6) is the main carrier element of the in-cabin overhead console (1) and has more than one cavity (6.1). The holding frame (6) is mounted to the cabin (A) and thus becomes rigid with the cabin (A).

In one embodiment of the invention, the in-cabin overhead console (1) includes a chamber (2). The said chamber (2) is the part which enables to store the objects that the driver and/or passengers prefer to conceal and/or store without falling into the cabin (A). The chamber (2) provided in this embodiment of the invention is comprised of side walls (2.1), a base (2.2), a top part (2.3) and a rear part (2.4). The base (2.2) part in the chamber (2) provided in this embodiment of the present invention is preferably the part closer to the ground plane and is the place where the objects preferred to be concealed and/or stored by the driver and/or passengers are positioned. A top part (2.3) is located on the opposite side of the base (2.2) part. The distance between the base (2.2) and the top part (2.3) defines the height of the chamber (2). There is provided a side wall (2.1) on each of the two opposite sides of the base (2.2) and the top part (2.3). These side walls (2.1) close the two surfaces of the chamber (2) whose five surfaces are closed. The side walls (2.1), the base (2.2) and the top part (2.3) are structures that are formed at a ninety degree angle to each other, and the said side walls (2.1), the base (2.2) and the top part (2.3) constitute the four closed surfaces of the chamber (2). Among the said surfaces, the side walls (2.1) are positioned to be opposite to each other and the base (2.2) and the top part (2.3) are in opposite positions. In addition to the said side walls (2.1), base (2.2) and top part (2.3), the chamber (2) includes a rear part (2.4). The said rear part (2.4) forms the last closed surface of the chamber (2). The rear part (2.4) provided in this embodiment of the invention is formed in an angled structure, however the rear part (2.4) provided in different embodiments of the invention can be formed in any geometric form preferred according to space requirement. In the chamber (2) provided in this embodiment of the invention, the side walls (2.1), base (2.2) and the top part (2.3) are preferably mounted in a rigid form to the holding frame (6). When the side walls (2.1), the base (2.2) and the top part (2.3) are mounted to the holding frame (6) in the chamber (2), the base (2.2) and the top part (2.3) are positioned parallel to the ground plane, while the side walls (2.1) are positioned perpendicular to the ground plane. In the chamber (2) provided in this embodiment of the present invention, an interior space (2.5) is formed by configuring the side walls (2.1), the base (2.2), the top part (2.3) and the rear part (2.4) as described. The interior space (2.5) is the usable storage area of the chamber (2). In the chamber (2) provided in this embodiment of the present invention, in addition to the side walls (2.1), base (2.2), top part (2.3) and the rear part (2.4), an opening (2.6) is provided as the sixth surface. The said opening (2.6) is a surface provided in the chamber (2) so that the preferred objects are placed into the chamber (2) and/or retrieved therefrom. The said opening (2.6) is the part where the edges of the side walls (2.1), the base (2.2) and the top part (2.3) facing the cabin (A) are joined. The chamber (2) provided in this embodiment of the invention includes a mounting hole (2.7) formed to enable the movement of the expander (3). The said mounting hole (2.7) is formed on the side walls (2.1). The mounting hole (2.7) provided in this embodiment of the invention is formed inside the chamber (2). However, the mounting hole (2.7) in different embodiments of the invention may be formed inside or outside of the side walls (2.1) depending on whether the expander (3) is inside or outside the chamber (2). In this embodiment of the invention, the chamber (2) also has a step slot (2.8). The said step slot (2.8) is provided so that the pull handle (3.3), which is used to move the expander (3) back and forth, can fit. The chamber (2) provided in this embodiment of the invention is positioned rigidly to one of the cavities (6.1) located in the holding frame (6).

In one embodiment of the invention, the in-cabin overhead console (1) includes an expander (3). The main purpose of the presence of the said expander (3) in the in-cabin overhead console (1) is to enable a partial and preferably incremental increase of the existing interior space (2.5) of the chamber (2). The geometry of the expander (3) in this embodiment of the invention has a similar geometry to the side walls (2.1), the base (2.2) and the top part (2.3) of the chamber (2), and may be larger or smaller than the chamber (2) according to preference. The expander (3) in this embodiment of the invention is smaller than the chamber (2) and placed in the part formed by the side walls (2.1), the base (2.2) and the top part (2.3). In addition, the expander (3) in this embodiment of the invention is also capable of moving towards the inner region of the cabin (A) in the direction of the opening (2.6) between the said side walls (2.1), base (2.2) and the top part (2.3). In the said movement process, as the base (2.2) and the top part (2.3) of the chamber (2) are parallel to the ground plane, the expander (3) also moves parallel to the ground plane and moves between the side walls (2.1), the base (2.2) and the top part (2.3). The said movement can continue until the final depth, wherein the expander (3) is still in contact with the chamber (2). The expander (3) in this embodiment of the invention has a certain depth. The said depth can be formed at any size according to the preferred ratio of increasing the interior space (2.5) of the chamber (2). If the extra interior space (2.5) of the chamber (2) is preferred to be greater than the normal interior space (2.5) by t unit, then the value of the depth of the expander (3) is close to t unit. This way, the extra interior space (2.5) of the chamber (2) can be adjusted according to the depth of the expander (3). In this embodiment of the invention, the expander (3) includes a movement groove (3.1) which is at the same level with the mounting hole (2.7) and is formed for the movement of the expander (3) through the chamber (2). A movement member (5) is arranged into said movement groove (3.1), which enables the expander (3) to move through the chamber (2). In addition to the movement groove (3.1), the expander (3) has one or more fitting slots (3.2) which are provided to secure the movement member (5). Additionally, a pull handle (3.3) is also formed in the expander (3) to enable the expander (3) provided in this embodiment of the invention to be moved back and forth by the driver and or the passenger. A force is applied on the said pull handle (3.3) by the driver and/or the passenger and the expander (3) is taken out of the chamber (2) by means of said force.

In one embodiment of the invention, the in-cabin overhead console (1) includes a plurality of expanders (3). The first of the said expanders (3) is located between the side walls (2.1), the base (2.2) and the top part (2.3) located directly in the chamber (2). Another expander (3) is arranged inside the expander (3) placed in the chamber (2). In this case, there are two nesting expanders (3) in the chamber (2). In this case, the expanders (3) can be moved within each other and towards the opening (2.6) in the direction of the inner part of the cabin (A). In a different embodiment of the invention, more than two expanders (3) may also be used.

In one embodiment of the invention, the expander (3) provided in the in-cabin overhead console (1) includes a cover (4). The said cover (4) closes an open surface of the expander (3). When the open surface of the expander (3) is closed, naturally, the chamber (2) can also be completely closed. The cover (4) in this embodiment of the invention is mounted so as to be pivotable about the upper edge of the expander (3). Thus, when the cover (4) is preferred to be opened, it makes an angular movement about the upper edge of the expander (3) and does not cause a contraction in the cabin (A) due to said movement. If the cover (4) is completely opened, the cover (4) and the roof of the cabin (A) almost contact each other and at the same time the cover (4) becomes parallel to the ground plane. In this embodiment of the invention, the cover (4) has an opening handle (4.1). The said opening handle (4.1) is the opening member formed in the cover (4) so that the driver and/or the passenger can turn the cover (4) around the upper edge of the expander (3). The cover (4) also includes a movement edge (4.2) formed to allow the driver and/or the passenger to remove the expander (3) from the chamber (2) together with the cover (4) when the cover (4) is closed. The driver and/or the passenger can remove the cover (4) and the expander (3) by moving it through the chamber (2) by holding the said movement edge (4.2).

In this embodiment of the invention, the in-cabin overhead console (1) also includes a movement member (5). The said movement member (5) is formed so that one or more expanders (3) can be easily removed from within the chamber (2) and can move this way. The said movement member (5) has a first member (5.1) and a second member (5.2). In this embodiment of the invention, the first member (5.1) is mounted to the chamber (2), and the second member (5.2) is mounted to the expander (3). The first member (5.1) and the second member (5.2) can be easily slid on each other by means of a plurality of rotation members (5.3). The said rotation members (5.3) are positioned between the first member (5.1) and the second member (5.2) and they allow the first member (5.1) and the second member (5.2) to move relative to each other. In this embodiment of the invention, the movement member (5) also has a protrusion (5.4). The said protrusion (5.4) allows the first member (5.1) and the second member (5.2) and thus the expander (3) to be moved by being stopped at certain distances relative to the chamber (2). By means of the protrusion (5.4) provided in the movement member (5), the movement of the expander (3) outwardly from the chamber (2) can be stopped at the preferred spots, and when the expander (3) is stopped, the expander (3) can start to move again upon exertion of an amount of force thereon.

Operation of in-cabin overhead console (1) provided in this embodiment of the invention is carried out as follows. The in-cabin overhead console (1) in this embodiment of the invention is mounted in the vehicle cabin (A) preferably above the driver's and passenger's seat, and close to the windshield of the vehicle. The holding frame (6) located in the in-cabin overhead console (1) is mounted to the cabin (A), and the chamber (2) is mounted to the holding frame (6). The chamber (2) has an expander (3) preferably in the inner part thereof. When a pulling force is applied to the said expander (3), the said expander (3) is preferably gradually moved outwardly through the chamber (2). Since the cover (4) is connected to the expander (3), the said cover (4) moves with the expander (3) and can move outwards. The interior space (2.5) of the chamber (2) located in the in-cabin overhead console (1) can thus be adjusted at a preferred ratio. If it is preferred to reduce the interior space (2.5) of the chamber (2), this time the expander (3) is moved towards inside the chamber (2), thereby reducing the interior space (2.5) of the chamber (2).

## Claims

1. An in-cabin overhead console (1), which enables transportation and/or storage of different sized objects of the driver and passengers in the vehicle cabins (A) of heavy commercial vehicles without causing any contraction in the living space, essentially **characterized by**
- at least one chamber (2), which enables storage of an object preferred to be placed in a closed space in the vehicle cabin (A), and wherein only one of its six surfaces is open and the inner part thereof can accessed through the said open surface,
- at least one expander (3); which is positioned in or out of the chamber (2) to increase the storage volume of the chamber (2); and wherein two opposing surfaces of its six surfaces are open while the others are closed, and a cover (4) can be mounted to one of the said two open surfaces, and its surface with a cover (4) mounted is parallel with the open surface of the chamber (2); and which is also movable, preferably gradually, in both directions at the open surface of the chamber (2), and which, if the said movement is towards outside of the chamber (2), increases the storage volume of the chamber (2).

2. In-cabin overhead console (1) according to Claim 1, **characterized by** the holding frame (6), which has more than one cavity (6.1) and is rigidly mounted to the cabin (A).

3. In-cabin overhead console (1) according to Claim 1, **characterized by** the chamber (2), which enables to store the objects that the driver and/or passengers prefer to conceal and/or store without falling into the cabin (A), and which is comprised of side walls (2.1), a base (2.2), a top part (2.3) and a rear part (2.4).

4. In-cabin overhead console (1) according to Claim 1, **characterized by** the chamber (2) comprising the base (2.2) which is the part closer to the ground plane and is the place where the objects preferred to be concealed and/or stored by the driver and/or passengers are positioned; the top part (2.3) located on the opposite side of the base (2.2) part; and also a side wall (2.1) on each of the two opposite sides of the base (2.2) and the top part (2.3).

5. In-cabin overhead console (1) according to Claim 3, **characterized by** an interior space (2.5) which is the usable storage area of the chamber (2) and which is formed by configuring the side walls (2.1), the base (2.2), the top part (2.3) and the rear part (2.4) in the chamber (2).

6. In-cabin overhead console (1) according to Claim 3, **characterized by** the opening (2.6), which is a surface provided in the chamber (2) so that the preferred objects are placed into the chamber (2) and/or retrieved therefrom, and which is the part where the edges of the side walls (2.1), the base (2.2) and the top part (2.3) facing the cabin (A) are joined.

7. In-cabin overhead console (1) according to Claim 3, **characterized by** a mounting hole (2.7) which can be formed on the side walls (2.1) inside the chamber (2) to enable the movement of the expander (3) and which may be formed inside or outside of the side walls (2.1) depending on whether the expander (3) is inside or outside the chamber (2).

8. In-cabin overhead console (1) according to Claim 1, **characterized by** the expander (3); which enables a partial and preferably incremental increase of the existing interior space (2.5) of the chamber (2); and whose geometry has a similar geometry with the side walls (2.1), the base (2.2) and the top part (2.3) of the chamber (2); and which may be larger or smaller than the chamber (2) according to preference.

9. In-cabin overhead console (1) according to Claim 1, **characterized by** the expander (3), which is placed in the part formed by the side walls (2.1), the base (2.2) and the top part (2.3) and which is also capable of moving towards the inner region of the cabin (A) in the direction of the opening (2.6) between the said side walls (2.1), the base (2.2) and the top part (2.3).

10. In-cabin overhead console (1) according to Claim 1, **characterized by** the expander (3), whose depth can be formed at any size according to the preferred ratio of increasing the interior space (2.5) of the chamber (2), and whose depth value is close to t unit if the extra interior space (2.5) of the chamber (2) is preferred to be greater than the normal interior space (2.5) by t unit.

11. In-cabin overhead console (1) according to Claim 1, **characterized by** the expander (3) having a movement groove (3.1), which is at the same level with the mounting hole (2.7), and into which a movement member (5) is fitted that is formed for movement of the expander (3) through the chamber (2).

12. In-cabin overhead console (1) according to Claim 1, **characterized by** more than one expander (3), the first of which is located between the side walls (2.1), the base (2.2) and the top part (2.3) located in the chamber (2), and the other of which is arranged inside the expander (3) placed in the chamber (2), and thus of which there are two nesting ones in the chamber (2).

13. In-cabin overhead console (1) according to Claim 1, **characterized by** the cover (4), which closes an open surface of the expander (3), and which is mounted so as to be pivotable about the upper edge of the expander (3), and which, when preferred to be opened, makes an angular movement about the upper edge of the expander (3).

14. In-cabin overhead console (1) according to Claim 1, **characterized by** the movement member (5) which is formed so that one or more expanders (3) can easily go out of the chamber (2) and can move this way, and which comprises a first member (5.1) mounted to the chamber (2) and a second member (5.2) mounted to the expander (3).

15. In-cabin overhead console (1) according to Claim 1, **characterized by** the movement member (5) having rotation members (5.3), which are positioned between the first member (5.1) and the second member (5.2) and allow the first member (5.1) and the second member (5.2) to move relative to each other, and a protrusion (5.4), which enables the first member (5.1) and the second member (5.2) and thus the expander (3) to be moved by being stopped at certain distances relative to the chamber (2) and which realizes the outward movement of the expander (3) from the chamber (2) by stopping it at the preferred parts.
